# EUROPEAN PATENT SPECIFICATION

(11) **EP 3 919 346 B1**
(45) Date of publication and mention of the grant of the patent: **02.09.2026**
(21) Application number: 21161743.6
(22) Date of filing: 10.03.2021
(51) Int. Cl.: B61L 15/00, B61L 23/04, H04N 23/63, H04N 23/667, H04N 23/72, H04N 23/90

(54) **MONITORING SYSTEM AND DISPLAY CONTROL METHOD**
ÜBERWACHUNGSSYSTEM UND ANZEIGESTEUERUNGSVERFAHREN
SYSTÈME DE SURVEILLANCE ET PROCÉDÉ DE COMMANDE D'AFFICHAGE

(30) Priority: 05.06.2020 JP 2020098626
(43) Date of publication of application: 08.12.2021
(73) Proprietor: KOKUSAI DENKI Electric Inc., Tokyo 105-8039 (JP); Hitachi Rail Ltd., London, Greater London EC4M 7AW (GB)
(72) Inventor: ITO, Tetsuya, Kodaira-shi, Tokyo 1878511 (JP); NAOI, Hironori, Kodaira-shi, Tokyo 1878511 (JP); SCRIMSHAW, Paul, London, Greater London EC1N 2PB (GB)
(74) Representative: J A Kemp LLP

(56) References cited:
- EP-A1- 3 349 440
- US-A1- 2017 013 237
- US-A1- 2019 007 626

## Description

The present invention pertains to a monitoring system for monitoring the vicinity of the doors of a train by means of camera images.

Conventional train systems allow a train driver or a trainman (hereinafter, they are simply referred to as trainman) to check passengers who are moving along a platform with images and to carry out the opening and closing operations of the doors after confirming the safety of the passengers. The images of the passengers are taken by cameras installed on the main bodies of the cars of a train or along the platform and are displayed on a monitor in the cabin of the train or on a monitor along the platform. The difference in the locations where the cameras are installed is mainly caused by the difference of whether the operation of the trains and the infrastructure are managed by the same company or different companies.

In the following, a monitoring system where images taken by cameras installed on the main bodies of the cars of a train are displayed on a monitor in the cabin is described. JP2018-113602A, for example, discloses an invention which pertains to a monitoring system where images taken by a plurality of cameras are simultaneously displayed on one monitor.

US 2017/013237 A1 discloses a monitoring system and a monitoring method. US 2019/007626 A1 discloses systems and methods for detecting objects in imaging systems.

### PROBLEMS TO BE SOLVED

Sometimes a haze phenomenon occurs where external factors such as the weather conditions that mainly include sun rays make camera images be viewed as being hazy as compared to ordinary conditions. That is to say, a haze phenomenon occurs when high-intensity rays enter into a camera in such a manner that the exposure time exceeds an appropriate time for creating proper image data, which makes the camera images unclear such as being whitish. In addition, dust or dirt easily attaches to the protective cover (front glass) of the cameras that are arranged on the outside of the cars of a train, and therefore, the visibility of the camera images is lowered due to the attached dust or dirt.

The present invention is provided in view of the conventional situation as described above, and an object thereof is to provide a monitoring system where camera images having excellent visibility can be gained without putting a burden on a trainman.

The invention is defined in the claims.

The present invention makes it possible to provide a monitoring system where camera images having excellent visibility can be gained without putting a burden on a trainman.
FIG. 1 is a schematic diagram showing an example of the configuration of the monitoring system according to one embodiment of the present invention;
FIG. 2 is a diagram showing an example of the camera arrangement in the monitoring system in FIG. 1;
FIG. 3 is a diagram showing an example of a logic circuit for generating a reset signal in order to automatically reset the intensity of a haze correction;
FIG. 4 is a diagram showing an example of a logic circuit for generating a touch sensor starting signal in order to automatically start the touch sensor function;
FIG. 5 is a diagram showing an example of a timing chart for automatically resetting the intensity of a haze correction;
FIG. 6 is a diagram showing an example for the collective adjustment of the intensity of a haze correction for all the camera images that are being displayed;
FIG. 7 is a diagram showing an example for the collective adjustment of the intensity of a haze correction for the respective camera images taken in the selected direction; and
FIG. 8 is a diagram showing an example for the collective adjustment of the intensity of a haze correction for the respective images taken by the cameras of the selected car.

One embodiment of the present invention is described in reference to the drawings.

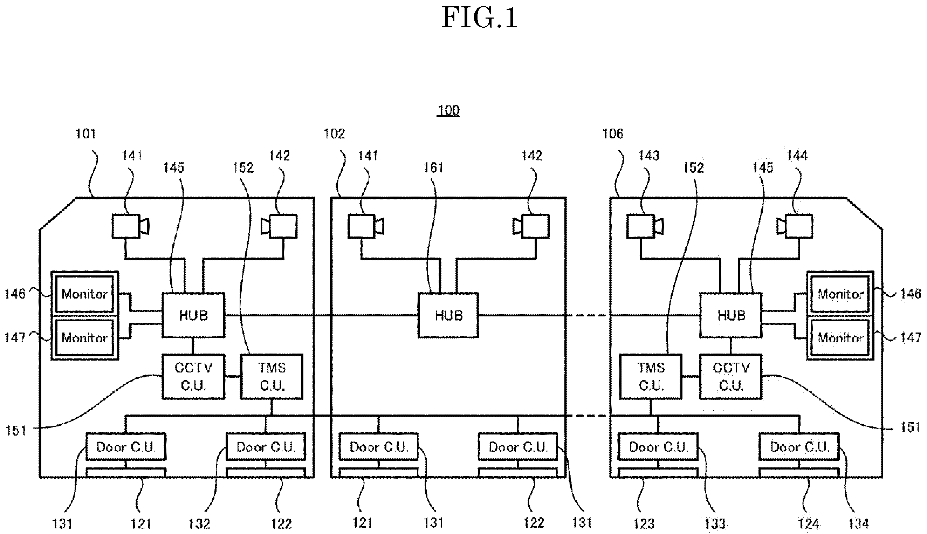

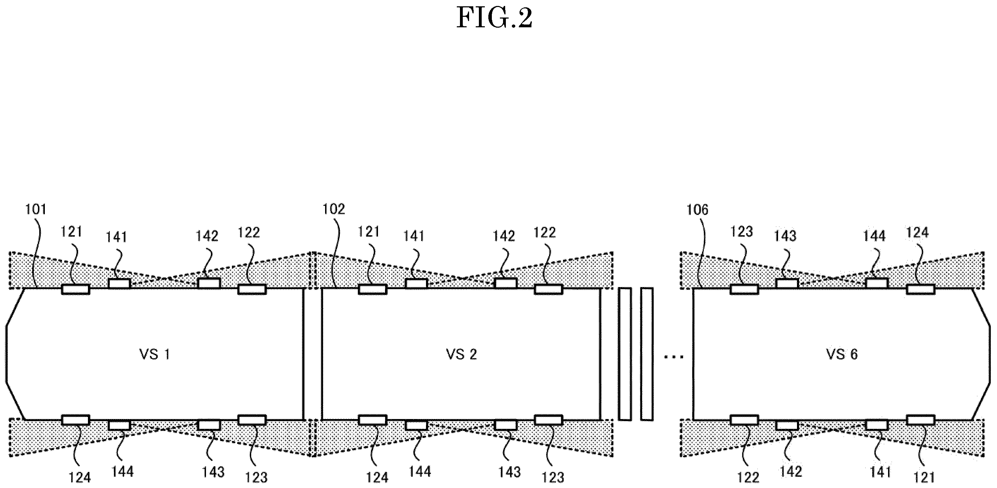

FIG. 1 is a diagram showing an example of the configuration of the monitoring system according to one embodiment of the present invention. In addition, FIG. 2 is a diagram showing an example of the camera arrangement in the monitoring system in FIG. 1.

A monitoring system 100 in the present example is equipped in a train formed of six cars 101 through 106. In the case where the train proceeds in the direction towards the left in the figure, the first car 101 on the left end becomes the front car, and the sixth car 106 on the right end becomes the rear car. Conversely, in the case where the train progresses in the direction towards the right in the figure, the sixth car 106 on the right end becomes the front car, and the first car 101 on the left end becomes the rear car. The train is formed by connecting the first through third cars to the fourth through sixth cars, which appears inverted from the rear, where the first through the third cars and the fourth through the sixth cars have the same structure.

Each car has two doors 121 and 122 on one side and two doors 123 and 124 on the other side. In addition, door control devices ("door C.U." in the figure) 131 through 134 for controlling the doors and cameras (image pickup devices) 141 through 144 for taking images of each door and its vicinity from the outside of the car are installed on each car so as to correspond to the respective doors 121 through 124. Here, FIG. 1 only shows the doors 121 and 122 (or 123 and 124), the door control devices 131 and 132 (or 133 and 134) and the cameras 141 and 142 (or 143 and 144) for the purpose of making the drawing convenient for the description.

The monitoring system 100 has the cameras 141 through 144, a switching hub ("HUB" in the figure) 145, monitors (display devices) 146 and 147, a CCTV (Closed-Circuit Television) control device ("CCTV C.U." in the figure) 151 and a TMS (Train Monitoring System) control device ("TMS C.U." in the figure) 152. These devices are connected by using network cables. In addition, a power supply cable is connected to these devices so that power is supplied from the power supply unit (not shown) in each car.

Four cameras 141 through 144 and a switching hub 145 are installed in each car. In addition, the first car 101 and the sixth car 106 have a cabin within which two monitors 146 and 147 are installed. The cameras 141 through 144 (and the monitors 146 and 147) in each car are connected to the switching hub 145 in the car through network cables.

Furthermore, a CCTV control device 151 and a TMS control device 152 are installed in the first car 101. The CCTV control device 151 is connected to the switching hub 145 through a network cable. In addition, the TMS control device 152 is connected to the CCTV control device 151 through a network cable, and is also connected to the door control devices 131 through 134 of the respective cars through network cables. Here, these devices may be multiplexed by arranging a CCTV control device 151 and a TMS control device 152 in the sixth car 106 in the same manner as in the first car 101.

The switching hub 145 in each car is connected to the switching hub 145 in an adjacent car through a network cable. In this manner, the switching hubs 145 that are respectively equipped in the adjacent cars are connected to each other so as to construct an in-train network. For example, these network cables are connected to a connection box (not shown) by passing through the space beneath the floor of each car, and the connection boxes in the adjacent cars are connected through jumper wires.

The TMS control device 152 communicates with the door control devices 131 through 134 in the respective cars so as to control the opening and closing of the doors 121 through 124, and provides train information on the state of the train to the CCTV control device 151 at intervals of a predetermined period of time. The train information includes the opening and closing state of each door in the train, the velocity at which the train runs, the side through which passengers are getting on or off (the side, left or right, where the door opens) in the station along which the train is currently stopping at (the next station to stop at in the case where the train is running), the number of cars of the train, the direction in which the train progresses and the like.

The cameras 141 through 144 on the respective cars can at least take images of the doors and their vicinities through which passengers get on or off, and are arranged so that a blind area becomes as small as possible. In the present example, as shown in FIG. 2, two cameras are arranged so as to face each other between the two doors, front and rear, on either side of each car. That is to say, the front camera 141 (or 143) attached to the car body so as to face the rear door side takes images of the rear door and its vicinity. In addition, the rear camera 142 (or 144) attached to the car body so as to face the front door side takes images of the front door and its vicinity.

A plurality of camera images taken by the cameras 141 through 144 on the respective cars are displayed on the monitors 146 and 147 in the car that is in the front of the train in the direction in which the train progresses under the control by the CCTV control device 151. That is to say, in the case where the train is running in the direction towards the left in the figure, camera images are displayed on the monitors 146 and 147 in the car 101. In the case where the train is running in the direction towards the right in the figure, camera images are displayed on the monitors 146 and 147 in the car 106. Here, camera images may be displayed on the monitors 146 and 147 in both cars 101 and 106 irrespective of the direction in which the train progresses.

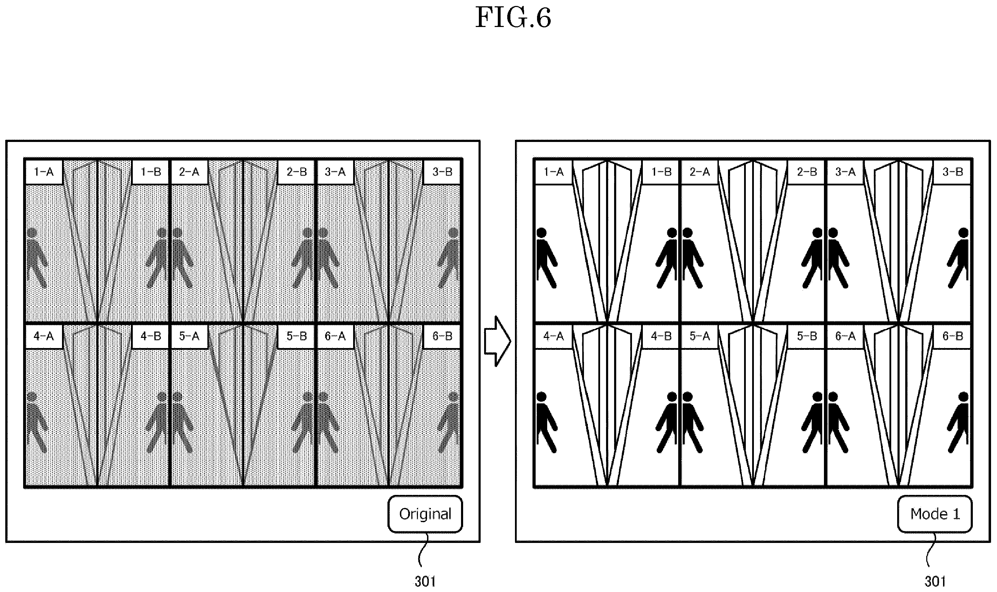

Each display region on the monitors 146 and 147 is divided into a plurality of areas so that a plurality of camera images taken by the respective cameras on one side of the train can be simultaneously displayed. In the present system, as shown in FIG. 6, for example, the display region on one monitor is divided into two in the upward and downward directions and six in the left and right directions so as to provide twelve areas in total. Accordingly, one monitor can display camera images from the six cars (12 camera images in total on one side of the train), and thus, camera images from the 12 cars at maximum can be displayed by using two monitors together. Since the train in the present example is formed of six cars, the following description cites an example of a case where camera images are displayed by solely using the monitor 146.

The CCTV control device 151 arranges a plurality of camera images taken by the respective cameras on one side of the train in the respective areas on the display region in such an order that the trainman can easily perceive the monitoring areas that correspond to the respective camera images. For example, camera images are arranged in the respective areas on the display region in such a manner that the camera images of the respective doors arranged in the order from the front of the train towards the rear in the direction in which the train progresses are allocated from the upper left to the lower right on the monitor in this order. The allocation of the camera images to the respective areas on the display region can be made by using the system disclosed in JP2018-113602A (corresponding to Unexamined EPC Application EP3349440A1), for example.

On the camera image in each area, the CCTV control device 151 can impose the door location information on the location of the door that is shown in the image. In FIG. 6, for example, the door location information that includes the figure that depicts the car number ("1" through "6") and the symbol that depicts whether the location of the door is in the front or the rear of the car ("A" or "B") is imposed on each camera image. For example, "3-B" indicates that the camera image shows the door on the rear side in the third car.

The cameras 141 through 144 are image pickup devices having a transparent protective cover (front glass) that covers the image pickup element in order to prevent external substances that cannot be predicted such as raindrops, small pebbles, exhaust gas and the like from making direct contact with the image pickup element. The image pickup element is a type of digital image pickup tool, which is formed of a CCD (Charge-Coupled Device), a CMOS (Complementary Metal-Oxide-Semiconductor) or other acceptable light receiving elements. The digital image pickup tool functions as a tool for converting a visible light image gained through the image pickup element to an electrical signal, and a signal processing unit within the camera constructs image data on the basis of a signal of a visible light image.

As described above, the cameras 141 through 144 have a haze correction function of carrying out a haze correction process that includes contrast expansion on the original camera image as a measure against the lowering of the visibility of the camera image due to a haze phenomenon or a flare phenomenon. Here, the haze correction function may be provided by other devices such as the CCTV control device 151 for controlling the display of camera images and the monitor 146 on which the camera images are displayed.

The monitor 146 is a display device having a touch sensor function that is provided at least in a portion of the display region, and can accept the user instruction for changing the intensity of the haze correction through the touch operation by the trainman. The intensity of the haze correction may have three stages, no correction, weak correction; and strong correction, for example, so that the user (trainman) can select any of the intensities.

When the monitor 146 accepts the user instruction (touch operation) for changing the intensity of the haze correction, this signal is transmitted to the CCTV control device 151. The CCTV control device 151 transmits a control signal for changing the intensity of the haze correction to the corresponding camera. As a result, the intensity of the haze correction to be carried out on the camera image is changed in the corresponding camera. In the case where the intensity of the haze correction is changed, this event is recorded in a storage device (not shown) as a log. The logs for changing the intensities of the haze correction are collected in the Train Operation Department so as to be used for the analysis of the time bands or the locations where the frequency in which the intensities of the haze correction are changed is high. These analysis results may be used to construct a mechanism for automatically adjusting the intensity of a haze correction. For example, such a situation may be understood where contrast adjustment is required at a high frequency for the camera images in a certain car due to the relationship with the illumination devices within the station premises or other environmental factors in a certain station. This information is registered in the TMS device 152 together with information on the location of the station and the information on the direction in which the train progresses so that an appropriate intensity connection can be automatically carried out when the train stops at the corresponding station after running along a predetermined route. It becomes possible to further reduce the burden of the trainman by adopting this configuration.

FIG. 6 shows an example of the collective adjustment of the intensity of the haze correction of all the camera images that are being displayed on the monitor 146. In FIG. 6, the major portion on the display region is used for the display of the camera images, and in a location towards the lower right thereof, a button 301 for collectively adjusting the intensity of the haze correction is arranged. The button 301 has three types of modes, "original" that corresponds to no correction, "mode 1" that corresponds to a weak correction, and "mode 2" that corresponds to a strong correction. The button 301 is configured to circulate the modes in response to the touch operation by a trainman and transmit a touch detection signal to the CCTV control device 151.

Upon reception of a touch detection signal from the button 301, the CCTV control device 151 transmits a control signal for indicating the change to the intensity of the haze correction that corresponds to the selected mode to all the cameras that are taking the camera images that are being displayed on the monitor 146. As a result, the intensity of the haze correction for all the camera images that are being displayed on the monitor 146 is changed. Consequently, it becomes possible through only one operation of the button 301 for the user (trainman) to make all the camera images that are not clear due to a haze phenomenon as shown on the left side in FIG. 6 easier to view by carrying out a haze correction at a weak level on all the camera images as shown on the right side in FIG. 6. In the case where the haze correction at a weak level is insufficient, once more operation of the button 301 makes it possible to carry out haze correction at a strong level on all of the images so that the images can be more easily viewed.

Here, it is desirable for the operation to adjust the intensity of a haze correction to be restricted in accordance with the status of the train so that the trainman can concentrate on the driving of the train. Concretely, it is necessary to keep paying attention to the direction in which the train progresses while the train is running, and therefore, the operation of the button 301 is restricted by not displaying the button 301 or nullifying (disactivating) the function thereof until the train stops at a station. When the train stops at a station, the button 301 is displayed or activated so that the operation of the button 301 can be accepted. It is possible for such a control to be implemented by using an electrical circuit or a logic circuit on the basis of the velocity of the train or the state of the opening or closing of the doors. Here, instead of not displaying only the button 301 or nullifying the function thereof, the monitor 146 itself may be turned off (black screen) so that nothing is displayed.

Even in the case where the haze correction is necessary at a certain station, there are many cases where the haze correction becomes unnecessary in the next station, and therefore, it is preferable to automatically reset the setting of the intensity of the haze correction so that the burden in terms of the adjustment of the intensity of the haze correction can be reduced. It is possible to implement this control of automatic resetting by using an electric circuit or a logic circuit on the basis of the velocity of the train and the state of the opening or closing of the doors. In the present example, the circuit for carrying out the above-described control is arranged in the CCTV control device 151; however, it may be arranged in another device (in the TMS control device 152, for example).

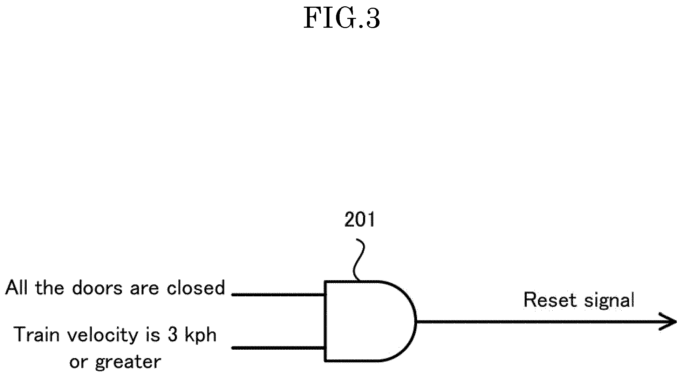

FIG. 3 illustrates a logic circuit for generating a reset signal in order to automatically reset the setting of the intensity of the haze correction. The logic circuit illustrated in FIG. 3 has an AND gate 201. At least two signals are inputted into the AND gate 201 so that the logical product of these is outputted. The first signal to be inputted into the AND gate 201 is a signal that indicates whether or not all the doors are in the closed state and is turned on (= "1") in the case where all the doors are in the closed state and is turned off (= "0") otherwise. The second signal to be inputted into the AND gate 201 is a signal that indicates whether or not the velocity of the train is 3 kph or greater, and is turned on (= "1") in the case where the velocity of the train is 3 kph or greater and is turned off (= "0") otherwise. Accordingly, in the case where all the doors are in a closed state and the velocity of the train is 3 kph or greater (that is to say, in the case where the train has started running), the reset signal outputted from the AND gate 201 is turned on (= "1") and is turned off (= "0") otherwise. Here, the first signal may be substituted with a signal for indicating the start of the interlocking of the doors that are being monitored by the TMS control device 152.

The CCTV control device 151 resets the setting of the intensity of the haze correction for all the cameras to an initial value (no correction in the present example) in accordance with the above-described reset signal, and at the same time stops displaying the camera images on the monitor 146 as well as the touch sensor function. As a result, the camera images displayed on the monitor 146 are in the state of not being corrected when the train stops at the next station. Here, other intensities such as a weak correction may be used as the initial value of the intensity of the haze correction. It is possible for a trainman to set an arbitrary intensity for the initial value.

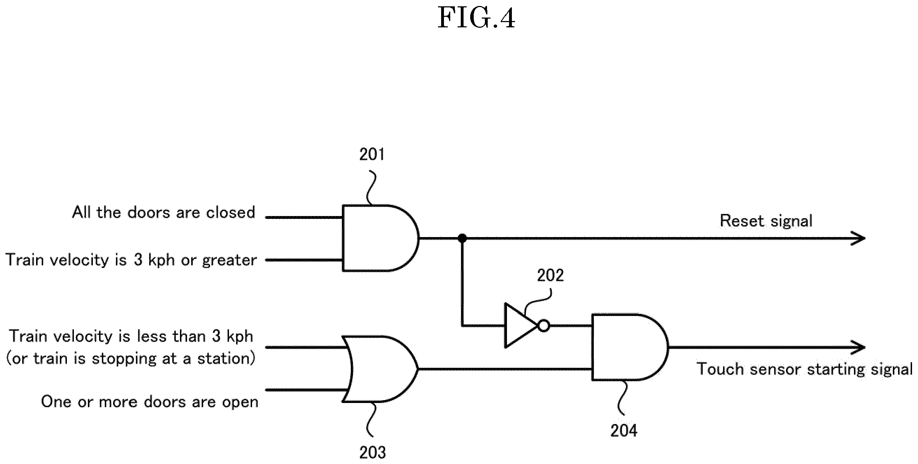

FIG. 4 illustrates a logic circuit for generating a touch sensor starting signal in order to automatically start the touch sensor function so that the adjustment operation for the intensity of the haze correction becomes possible in addition to the automatic resetting in FIG. 3. The logic circuit illustrated in FIG. 4 has an AND gate 201, a NOT gate 202, an OR gate 203 and an AND gate 204. The input and output of the AND gate 201 are the same as in FIG. 3, and therefore, the descriptions thereof are not repeated.

At least two signals are inputted into the OR gate 203 so that the logical sum of these is outputted. The first signal to be inputted into the OR gate 203 is a signal that indicates whether or not the velocity of the train is less than 3 kph, and is turned on (= "1) in the case where the velocity of the train is less than 3 kph and is turned off (= "0") otherwise. The second signal to be inputted into the OR gate 203 is a signal that indicates whether or not one or more doors are in the open state, and is turned on (= "1") in the case where one or more doors are in the open state and turned off (= "0") otherwise. Accordingly, in the case where the velocity of the train becomes less than 3 kph or one or more doors are in the open state (that is to say, in the case where it is necessary to confirm the safety of a passenger in the vicinity of a door), the signal outputted from the OR gate 203 is turned on (= "1") and is turned off (= "0") otherwise.

The first signal to be inputted into the AND gate 204 is a signal that has been branched from the signal outputted from the AND gate 201 and inverted by the NOT gate 202. That is to say, in the case where the reset signal outputted from the AND gate 201 is turned off (= "0"), the signal outputted from the NOT gate 202 is turned on (= "1"), and otherwise the signal outputted from the NOT gate 202 is turned off (= "0"). The second signal to be inputted into the AND gate 204 is a signal outputted from the OR gate 203. Accordingly, in the case where the reset signal outputted from the AND gate 201 is turned on (= "1"), the touch sensor starting signal that is outputted from the AND gate 204 is always turned off (= "0"). Meanwhile, in the case where the reset signal outputted from the AND gate 201 is turned off (= "0"), the signal outputted from the OR gate 203 is outputted as it is from the AND gate 204 as a touch sensor starting signal.

The CCTV control device 151 starts displaying the camera images on the monitor 146, and at the same time starts the touch sensor function in accordance with the above-described touch sensor starting signal. As a result, the camera images are automatically displayed on the monitor 146 when the train arrives at a station, and the trainman can carry out the adjustment operation of the intensity of the haze correction if necessary. The display and the touch sensor function on the monitor 146 are maintained during the period when the touch sensor starting signal is turned on and are stopped when the reset signal is turned on.

As described above, a reset signal or a touch sensor starting signal is outputted from the logic circuit in FIG. 4, and these signals are in an inverted relationship, which allows either signal to always be outputted. In the state where at least one door is open, a camera image is displayed on the monitor 146 through the output of a touch sensor starting signal, which is appropriate for the confirmation of the safety of the passengers who are getting on or off the train. In addition, the state where no signal it outputted from the AND gate 201 is treated as one indicator, and thus, a camera image is displayed on the monitor 146 through the output of a touch sensor starting signal even in the case where an abnormality takes place when the doors are closed or the velocity is measured. Here, the logic circuits in FIGS. 3 and 4 are merely illustrative and may be replaced with another logic circuit that can output similar results.

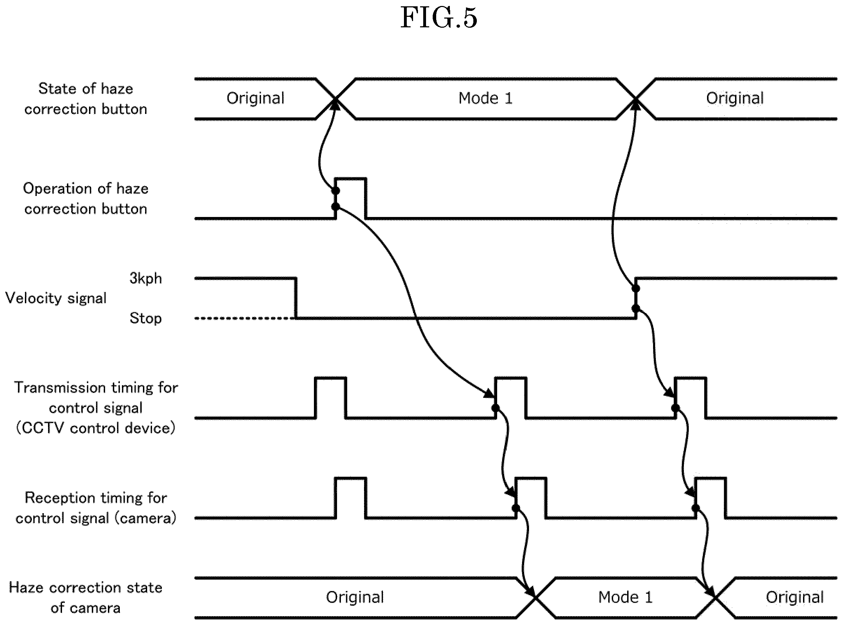

FIG. 5 illustrates a timing chart for automatically resetting the intensity of the haze correction. In the example in FIG. 5, the trainman can touch the button 301 while the train is stopping so as to change the "original" (no correction) to "mode 1" (weak correction) in order to allow the control signal transmitted at the next timing to transfer an indication to the camera side, and thus, the intensity of the haze correction for the camera images is changed. After that, all the doors are closed and the train starts running. When the velocity at which the train runs becomes 3 kph or greater, the above-described logic circuit outputs a reset signal. As a result, the mode of the button 301 returns to its original state, and the control signal transmitted at the next timing transfers an indication to the camera side, and thus, the intensity of the haze correction for the camera images is reset. Accordingly, it is not necessary for the trainman to manually reset the intensity of the haze correction.

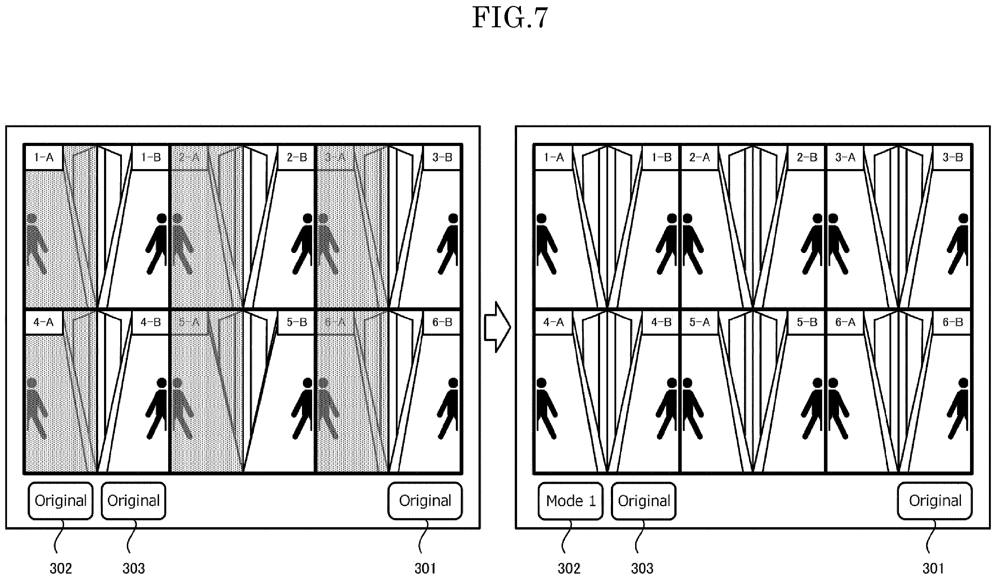

Though FIG. 6 shows an example where the intensity of the haze correction for all the camera images that are being displayed on the monitor 146 is collectively adjusted, the intensity of the haze correction may be adjusted for certain separate groups. For example, a case where the intensity of the haze correction for the respective camera images is adjusted in separate directions in which images are taken is described in reference to FIG. 7. In FIG. 7, a button 302 for collectively adjusting the intensity of the haze correction for the respective camera images of the doors on the front side of the cars and a button 303 for collectively adjusting the intensity of the haze correction for the respective cameras of the doors on the rear side of the cars are arranged in the location in the lower left of the display portion of the camera images. In the case where sunrays or the like make the camera images of the doors on the front side of each car unclear, the display as shown on the left side in FIG. 7 is changed to the display as shown on the right side in FIG. 7 through the touch operation of the button 302. That is to say, the intensity of the haze correction for the camera images of the doors on the front side of each car, (1-A, 2-A, 3-A, 4-A, 5-A and 6-A) is changed from no correction (original) to a weak correction (mode 1).

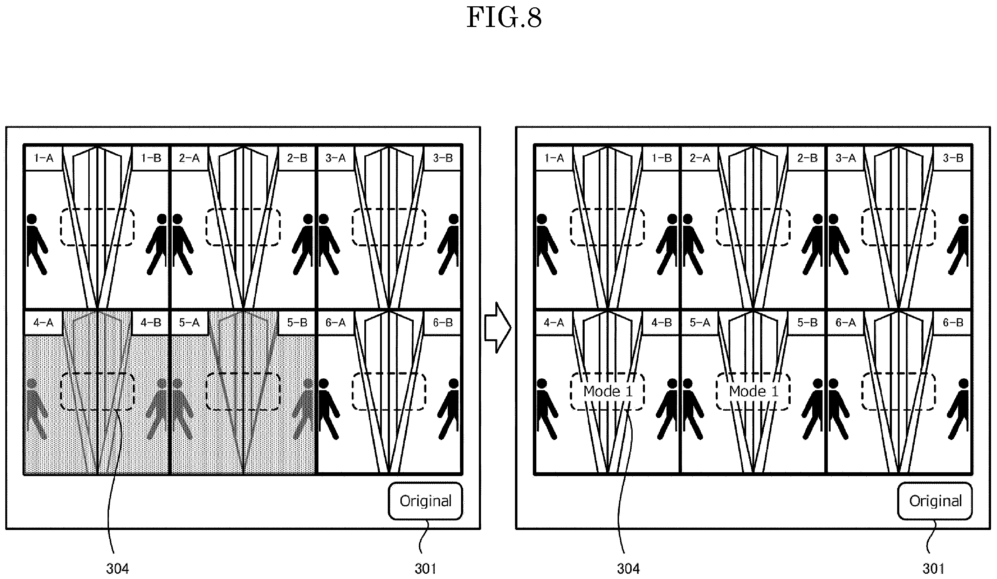

A case where the intensity of the haze correction for the respective camera images is adjusted for separate cars is described as another example in reference to FIG. 8. In FIG. 8, buttons 304 for collectively adjusting the intensity of the haze correction for the camera images of the respective cars are arranged so as to overlap the center portions of the two camera images of the respective cars. In the case where the fourth car 104 and the fifth car 105 are in the shade of a building, which makes the camera images unclear, for example, the buttons 304 that overlap the camera images of these cars are touch operated in order to change the display as shown on the left side in FIG. 8 to the display as shown on the right side in FIG. 8. That is to say, the intensity of the haze correction for the camera images of the fourth car 104 and the fifth car 105 (4-A, 4-B, 5-A and 5-B) is changed from no correction (original) to a weak correction (mode 1).

Here, the examples in FIGS. 6 through 8 are merely illustrative and may be combined. In addition, the configuration is not limited to the above-described configuration where the intensity of the haze correction is collectively adjusted for a plurality of camera images, and the configuration may allow the intensity of the haze correction to be adjusted individually for the respective camera images. In this case, buttons for adjusting the intensity of the haze correction may be separately arranged so as to overlap the respective camera images or may be separately arranged so as to be adjacent to the respective camera images. In the case where not only the monitor 146 but also the monitor 147 is used together to display a plurality of camera images, it also becomes possible to collectively or individually adjust the intensity of the haze correction for a plurality of camera images that are being displayed on the respective monitors.

As described above, the monitoring system 100 in the present example is provided with cameras 141 through 144 attached to the outside of the cars of a train, monitors 146 and 147 that display camera images taken by the cameras 141 through 144, and a CCTV control device 151 that controls the intensity of the haze correction for the camera images in accordance with the instruction by the user, and that configuration allows the CCTV control device 151 to reset the setting of the intensity of the haze correction in response to the detection of the train being in a predetermined state.

In this configuration, even in the case where the intensity of the haze correction is manually changed in order to make it easier to view camera images under a certain environment, the setting is automatically reset to the original state, and therefore, the burden of a trainman in terms of the adjustment of the intensity of the haze correction can be reduced. In addition, the operation for returning the intensity of the haze correction to the original state after confirming the safety of the passengers through camera images becomes unnecessary for the trainman, who thus can easily concentrate on the driving of the train.

In addition, the monitoring system in the present example has a configuration where the CCTV control device 151 determines whether or not the train is in the predetermined state on the basis of the information on the opening or closing state of the doors of the train and the information on the velocity of the train that have been received from the TMS control device 152. Concretely, in the case where all the doors are in the closed state and the velocity of the train becomes a predetermined value (3 kph in the present example) or greater, it is determined that the train is in the predetermined state, and the setting of the intensity of the haze correction is reset. Accordingly, the setting of the intensity of the haze correction can be automatically reset at the point in time when the train has started running (that is to say, at the point in time when the necessity to confirm the camera images has decreased).

Furthermore, the monitoring system in the present example has a configuration where the monitors 146 and 147 have a touch sensor function provided at least in a portion of the display region, the CCTV control device 151 uses a signal that has been inverted from the reset signal for resetting the setting of the intensity of the haze correction in order to generate a touch sensor starting signal for starting the touch sensor function, and the monitors 146 and 147 accept the indication by the user through the touch sensor function that has been started in response to the touch sensor starting signal. Accordingly, the setting of the intensity of the haze correction can be already in the reset state when the touch sensor function is started. Here, the configuration where the indication by the user is accepted through the touch sensor function is merely an example, and another input device such as a mouse connected to the monitors 146 and 147 may be used to accept the indication by the user. Alternatively, a physical button may be arranged adjacent to the display regions of the monitors 146 and 147 so that the indication by the user can be accepted. In addition, the monitor 146 and 147 are not limited to those equipped in the cabin and may be formed in a portable terminal device (for example, a tablet terminal) carried by a trainman other than the train driver. In this case, images and instructions by the user are communicated in two directions via the wireless communication interface of the portable terminal device having the monitors 146 and 147 and the interface of the wireless communication device connected to the switching hub 145, and thus, it becomes possible to confirm the safety in proximity to the door 121 on the portable terminal device.

Though the present invention is described in detail above, the present invention is not limited to the configurations as described above, and it is not necessary to say that the invention may be implemented with a configuration other than the above description. For example, it is possible for the present invention to be applied to various types of trains such as a monorail or a tram in addition to the trains that run on a railway.

It is also possible for the present invention to provide a method that includes a technical procedure in terms of the above-described process, a program for allowing a processor to implement the above-described process, a storage medium for storing such a program in a computer readable manner, and the like.

Here, the scope of the present invention is not limited to that of the exemplary embodiments that are illustrated and described, and is defined by the claims.

The present invention can be applied to a monitoring system for monitoring the vicinity of the doors of a train by means of camera images.

### REFERENCE SIGNS LIST

100: monitoring system
101 through 106: car
121 through 124: door
131 through 134: door control device
141 through 144: camera
145: switching hub
146 and 147: monitor
151: CCTV control device
152: TMS control device

## Claims

1. A monitoring system (100), comprising:
a camera (141-144) attachable to an outside of a car (101-106) of a train;
a monitor (146, 147) configured to display a camera image taken by the camera and a button (301) for adjusting the intensity of a haze correction for the camera image; and
a control device (131-134) configured to control the intensity of the haze correction in accordance with an instruction based on an operation of the button by a user, wherein
the monitoring system is adapted so that the button is not displayed or its function is nullified until the train stops at a station, and
the control device is configured to reset the setting of the intensity of the haze correction to an initial value in the case where all doors of the train are in a closed state and the velocity of the train is a predetermined velocity or greater.

2. The monitoring system according to claim 1, wherein
the monitor has a touch sensor function provided at least in a portion of a display area,
the control device is configured to use a signal that is gained by inverting a reset signal for resetting the setting of the intensity of the haze correction in order to generate a starting signal for starting the touch sensor function, and
the monitor is configured to accept the instruction by the user through the touch sensor function that has been started in accordance with the starting signal.

3. The monitoring system according to claim 1 or 2, wherein
the monitor is configured to accept as the instruction by the user an instruction for collectively adjusting the intensity of the haze correction for all camera images that are being displayed.

4. The monitoring system according to any of claims 1 through 3, wherein
the monitor is configured to display, as the button, a first button for collectively adjusting the intensity of the haze correction for respective camera image of the doors on the front side of the car taken from the rear side of the car and a second button for collectively adjusting the intensity of the haze correction for respective camera image of the doors on the rear side of the car taken from the front side of the car,
in response to the instruction based on the operation of the first button or the second button by the user, the control device is configured to collectively adjust the intensity of the haze correction for respective camera images corresponding to the operated button from among a plurality of camera images that are being displayed.

5. The monitoring system according to any of claims 1 through 4, wherein
the monitor is configured to accept as the instruction by the user an instruction for collectively adjusting the intensity of the haze correction for the respective camera images of the selected car from among a plurality of camera images that are being displayed.

6. The monitoring system according to any of claims 1 through 5, wherein
the monitor is configured to accept as the instruction by the user an instruction for individually adjusting the intensity of the haze correction for the selected camera image from among a plurality of camera images that are being displayed.

7. A display control method in a car equipment type monitoring system (100) that is provided with a camera (141-144) attached to an outside of a car (101-106) of a train and a monitor that displays a camera image taken by the camera and a button (301) for adjusting the intensity of a haze correction for the camera image, comprising the steps of:
outputting a control signal for controlling the intensity of a haze correction for the camera image in accordance with an instruction based on an operation of the button by a user, wherein the button is not displayed or its function is nullified until the train stops at a station; and
outputting a reset signal for resetting the setting of the intensity of the haze correction to an initial value in the case where all doors of the train are in a closed state and the velocity of the train is a predetermined velocity or greater.

## Patentansprüche

1. Überwachungssystem (100), umfassend:
eine Kamera (141-144), die an einer Außenseite eines Wagens (101-106) eines Zugs befestigt werden kann;
einen Monitor (146, 147), der konfiguriert ist, um ein Kamerabild, das von der Kamera aufgenommen wird, und eine Schaltfläche (301) zum Anpassen der Intensität einer Dunstkorrektur für das Kamerabild anzuzeigen; und
eine Steuervorrichtung (131-134), die konfiguriert ist, um die Intensität der Dunstkorrektur gemäß einem Befehl basierend auf einer Betätigung der Schaltfläche durch einen Benutzer zu steuern, wobei
das Überwachungssystem so eingerichtet ist, dass die Schaltfläche nicht angezeigt wird oder ihre Funktion annulliert wird, bis der Zug an einer Station hält, und
die Steuervorrichtung konfiguriert ist, um die Einstellung der Intensität der Dunstkorrektur für den Fall, wo sich alle Türen des Zugs in einem geschlossenen Zustand befinden und die Geschwindigkeit des Zugs eine vorgegebene Geschwindigkeit oder höher ist, auf einen Anfangswert zurückzusetzen.

2. Überwachungssystem nach Anspruch 1, wobei
der Monitor eine Berührungssensorfunktion hat, die mindestens in einem Abschnitt eines Anzeigebereichs bereitgestellt ist,
die Steuervorrichtung konfiguriert ist, um ein Signal zu verwenden, das durch Invertieren eines Rücksetzungssignals zum Zurücksetzen der Einstellung der Intensität der Dunstkorrektur zum Erzeugen eines Startsignals zum Starten der Berührungssensorfunktion erhalten wird, und
der Monitor konfiguriert ist, um den Befehl durch den Benutzer durch die Berührungssensorfunktion zu akzeptieren, die gemäß dem Startsignal gestartet wurde.

3. Überwachungssystem nach Anspruch 1 oder 2, wobei
der Monitor konfiguriert ist, um als den Befehl durch den Benutzer einen Befehl zum gemeinsamen Anpassen der Intensität der Dunstkorrektur für alle Kamerabilder, die angezeigt werden, zu akzeptieren.

4. Überwachungssystem nach einem der Ansprüche 1 bis 3, wobei
der Monitor konfiguriert ist, um als die Schaltfläche eine erste Schaltfläche zum gemeinsamen Anpassen der Intensität der Dunstkorrektur für jeweilige Kamerabilder der Türen auf der Vorderseite des Wagens, das von der Rückseite des Wagens aufgenommen wird, und eine zweite Schaltfläche zum gemeinsamen Anpassen der Intensität der Dunstkorrektur für jeweilige Kamerabilder der Türen auf der Rückseite des Wagens, das von der Vorderseite des Wagens aufgenommen wird, anzuzeigen,
als Reaktion auf den Befehl basierend auf der Betätigung der ersten Schaltfläche oder der zweiten Schaltfläche durch den Benutzer die Steuervorrichtung konfiguriert ist, um gemeinsam die Intensität der Dunstkorrektur für jeweilige Kamerabilder entsprechend der betätigten Schaltfläche aus einer Vielzahl von Kamerabildern anzupassen, die angezeigt werden.

5. Überwachungssystem nach einem der Ansprüche 1 bis 4, wobei
der Monitor konfiguriert ist, um als den Befehl durch den Benutzer einen Befehl zum gemeinsamen Anpassen der Intensität der Dunstkorrektur für die jeweiligen Kamerabilder des ausgewählten Wagens aus einer Vielzahl von Kamerabildern, die angezeigt werden, zu akzeptieren.

6. Überwachungssystem nach einem der Ansprüche 1 bis 5, wobei
der Monitor konfiguriert ist, um als den Befehl durch den Benutzer einen Befehl zum individuellen Anpassen der Intensität der Dunstkorrektur für das ausgewählte Kamerabild aus einer Vielzahl von Kamerabildern, die angezeigt werden, zu akzeptieren.

7. Anzeigesteuerverfahren in einem Wagenausrüstungstypüberwachungssystem (100), das mit einer Kamera (141-144), die an einer Außenseite eines Wagens (101-106) eines Zugs befestigt ist, und einem Monitor, der ein Kamerabild, das von der Kamera aufgenommen wird, und eine Schaltfläche (301) zum Anpassen der Intensität einer Dunstkorrektur für das Kamerabild anzeigt, versehen ist, umfassend die folgenden Schritte:
Ausgeben eines Steuersignals zum Steuern der Intensität einer Dunstkorrektur für das Kamerabild gemäß einem Befehl basierend auf einer Betätigung der Schaltfläche durch einen Benutzer, wobei die Schaltfläche nicht angezeigt wird oder ihre Funktion annulliert wird, bis der Zug an einer Station hält; und
Ausgeben eines Rücksetzungssignals zum Zurücksetzen der Einstellung der Intensität der Dunstkorrektur auf einen Anfangswert für den Fall, dass sich alle Türen des Zugs in einem geschlossenen Zustand befinden und die Geschwindigkeit des Zugs eine vorgegebene Geschwindigkeit oder höher ist.

## Revendications

1. Système de surveillance (100), comprenant :
une caméra (141-144) pouvant être fixée à l'extérieur d'une voiture (101-106) d'un train,
un moniteur (146, 147) conçu pour afficher une image de caméra prise par la caméra ainsi qu'un bouton (301) permettant de régler l'intensité d'une correction du voile appliquée à l'image, et
un dispositif de commande (131-134) conçu pour commander l'intensité de la correction du voile selon une instruction reposant sur une interaction de l'utilisateur avec le bouton ;
ledit système de surveillance étant conçu de telle façon que le bouton ne s'affiche pas ou que sa fonction est désactivée tant que le train n'est pas à l'arrêt en gare, et
le dispositif de commande étant conçu pour réinitialiser le réglage de l'intensité de la correction du voile à une valeur initiale lorsque toutes les portes du train sont fermées et que la vitesse du train est supérieure ou égale à une vitesse prédéterminée.

2. Système de surveillance selon la revendication 1, dans lequel
le moniteur possède une fonction de capteur tactile prévue au moins sur une portion d'une région d'affichage,
le dispositif de commande est conçu pour utiliser un signal obtenu par inversion d'un signal de réinitialisation visant à réinitialiser le réglage de l'intensité de la correction du voile afin de générer un signal d'activation destiné à activer la fonction de capteur tactile, et
le moniteur est conçu pour accepter l'instruction utilisateur par le biais de la fonction de capteur tactile qui a été activée selon le signal d'activation.

3. Système de surveillance selon la revendication 1 ou 2, dans lequel
le moniteur est conçu pour accepter, en tant qu'instruction utilisateur, une instruction visant à régler collectivement l'intensité de la correction du voile concernant toutes les images de caméra en cours d'affichage.

4. Système de surveillance selon l'une quelconque des revendications 1 à 3, dans lequel
le moniteur est conçu pour afficher, en tant que ledit bouton, un premier bouton permettant de régler collectivement l'intensité de la correction du voile concernant une image de caméra respective des portes situées à l'avant de la voiture, prise depuis l'arrière de ladite voiture, et un deuxième bouton permettant de régler collectivement l'intensité de la correction du voile concernant une image de caméra respective des portes situées à l'arrière de la voiture, prise depuis l'avant de ladite voiture,
en réaction à l'instruction reposant sur une interaction de l'utilisateur avec le premier bouton ou le deuxième bouton, le dispositif de commande est conçu pour régler collectivement l'intensité de la correction du voile concernant des images de caméra respectives correspondant au bouton actionné parmi une pluralité d'images de caméra en cours d'affichage.

5. Système de surveillance selon l'une quelconque des revendications 1 à 4, dans lequel
le moniteur est conçu pour accepter, en tant qu'instruction utilisateur, une instruction visant à régler collectivement l'intensité de la correction du voile concernant les images de caméra respectives de la voiture sélectionnée, parmi une pluralité d'images de caméra en cours d'affichage.

6. Système de surveillance selon l'une quelconque des revendications 1 à 5, dans lequel
le moniteur est conçu pour accepter, en tant qu'instruction utilisateur, une instruction visant à régler individuellement l'intensité de la correction du voile concernant l'image de caméra sélectionnée parmi une pluralité d'images de caméra en cours d'affichage.

7. Procédé de commande d'affichage dans un système de surveillance (100) de type équipement de voiture qui est pourvu d'une caméra (141-144) fixée à l'extérieur d'une voiture (101-106) d'un train et d'un moniteur qui affiche une image de caméra prise par la caméra ainsi qu'un bouton (301) permettant de régler l'intensité d'une correction du voile concernant l'image de caméra, comprenant les étapes consistant à :
émettre un signal de commande visant à commander l'intensité d'une correction du voile de l'image de caméra selon une instruction reposant sur une interaction de l'utilisateur avec le bouton, le bouton n'étant pas affiché ou sa fonction étant désactivée tant que le train n'est pas à l'arrêt en gare, et
émettre un signal de réinitialisation visant à réinitialiser le réglage de l'intensité de la correction du voile à une valeur initiale lorsque toutes les portes du train sont fermées et que la vitesse du train est supérieure ou égale à une vitesse prédéterminée.
